# EUROPÄISCHE PATENTSCHRIFT

(11) **EP 1 188 206 B1**
(45) Veröffentlichungstag und Bekanntmachung des Hinweises auf die Patenterteilung: **07.05.2003**
(21) Anmeldenummer: 00940302.3
(22) Anmeldetag: 02.06.2000
(51) Int. Cl.: H01S 3/07, H01S 3/094, H01S 3/06, H01S 3/081

(54) **FESTKÖRPERLASER**
SOLID STATE LASER
LASER A SOLIDE

(30) Priorität: 14.06.1999 DE 19927054
(43) Veröffentlichungstag der Anmeldung: 20.03.2002
(73) Patentinhaber: ROFIN-SINAR LASER GmbH, 22113 Hamburg (DE)
(72) Erfinder: LUDEWIGT, Klaus, D-22113 Oststeinbek (DE); GRUNDMANN, Frank-Peter, D-20357 Hamburg (DE)
(74) Vertreter: Mörtel & Höfner
(86) Internationale Anmeldenummer: EP0005049
(87) Internationale Veröffentlichungsnummer: WO00077895

(56) Entgegenhaltungen:
- DE-A- 19 541 020
- DE-A- 19 728 845
- DE-A- 19 835 108
- FR-A- 2 785 098
- US-A- 5 148 441
- PATENT ABSTRACTS OF JAPAN vol. 1998, no. 04, 31. März 1998 (1998-03-31) -& JP 09 312430 A (NAKAI SADAO;LASER GIJUTSU SOGO KENKYUSHO), 2. Dezember 1997 (1997-12-02)

## Beschreibung

Die Erfindung bezieht sich auf einen Festkörperlaser, bei dem als laseraktives Medium eine Kristallscheibe verwendet wird.

Ein solcher Festkörperlaser ist beispielsweise aus der US-Patentschrift 5,553,088 A oder aus der deutschen Offenlegungsschrift DE 197 46 835 A1 bekannt. Laseraktives Basiselement eines solchen Festkörperlasers, der in der Literatur auch als Scheibenlaser bezeichnet wird, ist eine dünne, nur wenige Zehntelmillimeter dicke und typisch einen Durchmesser im Größenordnungsbereich von etwa 10 mm aufweisende Kristallscheibe, die auf einem Kühlelement angeordnet ist und auf ihrer dem Kühlelement zugewandten Oberfläche mit einer reflektierenden Schicht versehen ist.

Die von einem solchen Scheibenlaser erzeugte Laserausgangsleistung wird nun u.a. bestimmt durch die in der Kristallscheibe absorbierte Leistung des zum optischen Pumpen verwendeten Pumplichtstrahls. Zur Einkopplung des Pumplichtstrahls in die Kristallscheibe gibt es nun prinzipiell zwei Möglichkeiten. Der Pumplichtstrahl kann entweder an einer Flachseite der Kristallscheibe (longitudinal) oder an der Schmalseite (transversal oder radial) eingekoppelt werden.

Eine longitudinale Pumpanordnung hat nun den grundsätzlichen Nachteil, dass aufgrund der kleinen Wegstrecke des Pumplichtstrahls im Kristall ein erheblicher Teil des Pumplichtstrahls nicht innerhalb der Kristallscheibe absorbiert wird und somit keinen Beitrag zur Laseranregung leistet. Bei der Verwendung von Yb:YAG als laseraktives Medium mit einer Dotierung von etwa 12% und einer Scheibendicke von 200 µm ergibt sich beispielsweise bei einer Wellenlänge des Pumplichtstrahls von 940 nm bei einem einfachen Durchlauf des Pumplichtstrahls durch die Scheibe eine Absorption von lediglich etwa 30%. Um die Ausnutzung der bereitgestellten Pumpleistung bei longitudinaler Pumpanordnung zu erhöhen, ist in Fig. 28 der US 5,553,088 A oder in Fig. 2 der Publikation "Effiziente diodengepumpte Scheibenlaser mit nahezu beugungsbegrenzter Strahlung", Laser und Optoelektronik, 29 (4), 1997, S. 76-83, eine Anordnung vorgeschlagen, bei der der Pumplichtstrahl mehrfach auf die Scheibe zurückreflektiert wird. Dies erfordert jedoch einen aufwendigen optischen Aufbau mit einer Vielzahl von fokussierenden Spiegeln.

Diese Probleme können durch eine transversale Pumpanordnung vermieden werden, da dann die Weglänge des Pumplichtstrahls in der Kristallscheibe erhöht ist (siehe beispielsweise Fig. 1 der US 5,553,088 A). Bei einer solchen Pumpanordnung ist jede Kristallscheibe von einer Vielzahl von Laserdioden umgeben. Eine solche Anordnung eignet sich grundsätzlich auch zum Aufbau eines Hochleistungslasers, bei dem es erforderlich ist, mehrere Scheibenlaser optisch miteinander zu koppeln.

Die Ausgangsleistung einer Kristallscheibe ist nämlich auch bei maximaler Absorption der Pumplichtleistung auf zur Zeit etwa 500 Watt pro Scheibe begrenzt, da deren nutzbare Fläche und deren Dicke, letztere insbesondere aufgrund der erforderlichen Wärmeabfuhr und aufgrund der mit zunehmender Dicke einhergehenden Verringerung der Bruchfestigkeit, nicht erhöht werden kann. Um einen Scheibenlaser mit Ausgangsleistungen im Bereich von einigen Kilowatt bereitzustellen, ist es deshalb notwendig, eine Mehrzahl von Kristallscheiben einzusetzen.

Hierzu ist es aus der US 5,553,088 A, insbesondere Fig. 17, bekannt, eine Mehrzahl von Kristallscheiben optisch miteinander in einem sogenannten gefalteten Strahlengang zu koppeln, wobei jede Kristallscheibe transversal von einer Vielzahl von Pumplichtquellen umgeben ist, um eine hohe Absorption des Pumplichtstrahls sicherzustellen. Ein solcher Aufbau ist jedoch technisch sehr aufwendig, da jeder Kristallscheibe eine Pumpanordnung zugeordnet ist. Außerdem wird ein erheblicher Teil des Pumplichtstrahls in Randzonen der Kristallscheibe absorbiert, die nicht oder nur zu einem geringen Anteil zur Laserstrahlerzeugung beitragen.

Eine alternative Anordnung eines Festkörperlasers mit einer Mehrzahl von Kristallscheiben ist beispielsweise aus der DE 195 41 020 A1 oder der DE 197 28 845 A1 bekannt. Der prinzipielle Aufbau eines solchen Festkörperlasers ist in Fig. 1 dargestellt. Er umfasst vier auf ihrer Rückseite verspiegelte Kristallscheiben 2a-d, die gemeinsam mit einem als Endspiegel dienenden Resonatorspiegel 4 und einem als Auskoppelspiegel dienenden Resonatorspiegel 6 einen Resonator 8 mit einem gefalteten Strahlengang für einen Laserstahl L festlegen. Außerhalb des Resonators ist eine Pumplichtquelle 10 angeordnet, die einen Pumplichtstrahl P erzeugt, der über den Resonatorspiegel 4 in den Resonator 8 eingekoppelt wird. Der als End- bzw. Einkoppelspiegel dienende Resonatorspiegel 4 ist hierzu hochreflektierend für den Laserstrahl L und transmittierend für den Pumplichtstrahl P.

Der als Auskoppelspiegel dienende Resonatorspiegel 6 ist im Ausführungsbeispiel hochreflektierend für den Pumplichtstrahl P und teildurchlässig (5 bis 10 %) für den Laserstrahl L.

Die optische Achse von Pumplichtstrahl P und Laserstrahl L ist aus mehreren Abschnitten zusammengesetzt, die zick-zack-förmig zwischen den Kristallscheiben 2a-d verlaufen. Diese Abschnitte spannen jeweils eine Ebene auf, so dass sowohl die optische Achse des Pumplichtstrahls P als auch die optische Achse des Laserstrahls L in einer Ebene liegen. Die optische Achse des Pumplichtstrahls P und die optische Achse des Laserstrahls L sind außerdem innerhalb des Resonators 8 zueinander komplanar, das heißt sie verlaufen in einer gemeinsamen Ebene. Im Ausführungsbeispiel verlaufen außerdem die optische Achse des Pumplichtstrahls P und die optische Achse des Laserstrahls L innerhalb des Resonators 8 kollinear zueinander und fallen zusammen.

In der Figur ist dabei sowohl der Pumplichtstrahl P als auch der Laserstrahl L durch Wiedergabe der jeweils zugehörigen optischen Achsen dargestellt, wobei zur Erhöhung der Übersichtlichkeit die die optische Achse des Pumplichtstrahls P darstellende Linie gestrichelt und die die optische Achse des Laserstrahls L darstellende Linie durchgezogen ist. Pumplichtstrahl P und Laserstrahl L bestehen in der Realität jeweils aus einem Strahlenbündel, wobei der Laserstrahl L aufgrund seiner hohen Strahlqualität ein nahezu paralleles Strahlenbündel bildet, während der Pumplichtstrahl P eine hohe Divergenz aufweist.

Auf diese Weise ist es möglich, mit einer einzigen Pumplichtquelle eine Mehrzahl von Kristallscheiben optisch zu pumpen. Die Pumplichtquelle kann außerdem als baulich vom Resonator getrennte Einheit außerhalb des Resonators angeordnet werden. Dadurch werden der Aufbau des Resonators vereinfacht und die Wartungsfreundlichkeit des Festkörperlasers erhöht. Der Begriff Pumplichtquelle ist dabei so zu verstehen, dass diese auch aus einer Vielzahl einzelner Lichtquellen, beispielsweise Laserdioden, aufgebaut sein kann, deren einzelne Pumplichtstrahlen zu einem Pumplichtstrahl zusammengesetzt werden.

Die bekannte Anordnung geht dabei von der Überlegung aus, dass der bei einer longitudinalen Pumpanordnung die Kristallscheibe zweimal durchquerende Pumplichtstrahl nur zu einem relativ geringen Anteil, in der Praxis weniger als 30%, absorbiert wird und somit effizient zum optischen Pumpen einer weiteren, im Strahlengang des reflektierten Pumplichtstrahls angeordneten Kristallscheibe verwendet werden kann.

Fig. 2 zeigt einen Laseraufbau, wie er prinzipiell aus der US 5,553,088 bekannt ist und bei dem jede Kristallscheibe 2 auf einem Kühlelement 12 angeordnet ist, wobei zur Erhöhung der thermischen Leitfähigkeit eine gut wärmeleitende Zwischenschicht aus duktilem Metall verwendet wird, so dass ein guter thermischer Kontakt zwischen dem Kühlelement 12 und der Kristallscheibe 2 gewährleistet ist. Auf ihrer dem Kühlelement 12 zugewandten Flachseite 20 ist die Kristallscheibe 2 mit einer reflektierenden Schicht 22 versehen, so daß der auf der gegenüberliegenden Flachseite 24 eintretende Pumplichtstrahl P nach Durchqueren der Kristallscheibe 2 in deren Dickenrichtung reflektiert wird, die Kristallscheibe 2 erneut durchquert und aus der Flachseite 24 austritt. Es handelt sich hiermit um eine longitidunale Pumpanordnung, d.h. der Pumplichtstrahl P tritt an einer der Flachseiten, im Beispiel die Flachseite 24, der Kristallscheibe 2 ein und an einer der Flachseiten, im Beispiel aufgrund der reflexiven Anordnung ebenfalls die Flachseite 24, erneut aus. Hierzu müssen die optische Achse des Pumplichtstrahls P und die Normale der Flachseite 24 nicht parallel zueinander verlaufen. Wichtig ist es nur, daß die optische Achse des Pumplichtstrahls P die Flachseite 24 der Kristallscheibe 2 schneidet.

Eine zum Ausführungsbeispiel gemäß Fig. 1 alternative und dem Grundsatz nach aus der DE 197 28 245 A1 oder der DE 195 41 020 A1 bekannte Pumplichtandordnung ist in Fig. 3 dargestellt. Gemäß dieser Figur sind acht Kristallscheiben 2a-2h optisch hintereinander angeordnet. In diesem Ausführungsbeispiel sind zwei Pumplichtquellen 10a,10b vorgesehen, da die in den ersten vier Kristallscheiben 2a-d erfolgende Absorption des von der Pumplichtquelle 10a erzeugten Pumplichtstrahls Pa eine Anregung der optisch dahinterangeordneten Kristallscheiben 2e-2h nicht mehr im ausreichendem Maße gewährleistet. Die beiden Pumplichtstrahlen Pa,Pb breiten sich ineinander in entgegengesetzter Richtung im Resonator 8 aus und werden an den einander entgegengesetzten Enden des Resonators 8 in die Resonatorspiegel 4 bzw. 6 eingekoppelt, wobei in diesem Ausführungsbeispiel der als Auskoppelspiegel dienende Resonatorspiegel 6 für die Wellenlänge des Pumplichtstrahls Pa,Pb transparent ist. Zur Einkopplung des Pumplichtstrahls Pb in den Strahlengang des Laserstrahls L ist ein außerhalb des Resonators 8 angeordneter. Strahlteiler 26 vorgesehen.

Der Erfindung liegt nun die Aufgabe zugrunde, einen Festkörperlaser anzugeben, dessen aktives Medium zum Erzeugen einer hohen Ausgangsleistung aus einer Mehrzahl von in einem Resonator angeordneten und miteinander optisch gekoppelten Kristallscheiben aufgebaut ist und einen technisch unaufwendigen Aufbau ermöglicht.

Die genannte Aufgabe wird gemäß der Erfindung gelöst mit einem Festkörperlaser mit den Merkmalen des Patentanspruches 1.

Gemäß der Erfindung ist innerhalb des Resonators zur Fokussierung des aus einer Kristallscheibe austretenden Pumplichtstrahls auf die optisch nachgeschaltete Kristallscheibe eine Linse angeordnet. Dadurch wird erreicht, dass der aus der Kristallscheibe austretende und eine schlechte Strahlqualität, d.h. eine große Divergenz aufweisende Pumplichtstrahl auch bei der nächsten Kristallscheibe vollständig zur Anregung ausgenutzt wird. Der divergent aus der vorgeschalteten Kristallscheibe austretende Pumplichtstrahl wird gebündelt, so dass er mit einem vorgegebenen Strahldurchmesser auf die optisch nachgeordnete Kristallscheibe auftrifft. Dabei wird der aus der vorgeordneten Kristallscheibe austretende Pumplichtstrahl auf die optisch nachfolgende Kristallscheibe abgebildet, d.h. die nachfolgende Kristallscheibe befindet sich annähernd in der Bildebene und die vorgeschaltete Kristallscheibe annähernd in der Objektebene des Abbildungselementes.

In einer bevorzugten Ausführungsform beeinflusst das Abbildungselement im Wesentlichen nur den Strahlengang des Pumplichtstrahls, da eine resonatorinterne Strahlformung des Laserstrahls aufgrund dessen hoher Strahlqualität nicht erforderlich ist.

Vorzugsweise ist als Abbildungselement eine Linse mit einer zentralen Öffnung vorgesehen. Dadurch wird durch das Abbildungselement nur der Strahlengang des Pumplichtstrahls beeinflußt und der Laserstrahl, dessen Divergenz gering ist, breitet sich ungestört im Resonator aus.

Alternativ hierzu kann als Abbildungselement auch eine Linse vorgesehen sein, deren Oberfläche nur in einem ringförmigen Randbereich gekrümmt ist und deren zentraler Bereich sich optisch wie eine Platte mit planparallelen Oberflächen verhält.

In einer weiteren vorteilhaften Ausgestaltung der Erfindung wird in den Resonator ein Pumplichtstrahl mit ringförmigem Querschnitt eingekoppelt.

Vorzugsweise ist jeweils einer der Flachseiten der Kristallscheiben eine Spiegelfläche zugeordnet, die den Pumplichtstrahl und den Laserstrahl in die Kristallscheibe zurückreflektiert. Dadurch wird einerseits die optische Weglänge des Pumplichtstrahls erhöht. Andererseits ist es auch möglich, die Kristallscheiben auf einem optisch undurchlässigen gut wärmeleitenden metallischen Kühlelement aufzubauen.

In einer besonders bevorzugten Ausgestaltung sind die Kristallscheiben derart angeordnet, dass sich für den Laserstrahl ein gefalteter Strahlengang ergibt. Dies ermöglicht einen kompakten Aufbau des Resonators.

In einer besonders bevorzugten Ausgestaltung der Erfindung absorbieren die in Ausbreitungsrichtung des Pumplichtstrahls optisch hintereinander angeordneten Kristallscheiben im Wesentlichen dieselbe Pumplichtleistung. Durch diese Maßnahme ist sichergestellt, dass jede der Kristallscheiben zum gesamten Festkörperlaser mit der gleichen Laserleistung beiträgt und in gleicher Weise thermisch belastet ist, so dass die konstruktive Auslegung der Kühlelemente, auf denen sich die Kristallscheiben jeweils befinden, gleich ist. Dadurch ist der konstruktive Aufwand verringert.

Die Egalisierung der absorbierten Pumplichtleistung geschieht vorzugsweise durch Variation der Dicke der Kristallscheiben, wobei bei Verwendung nur eines einzigen Pumplichtstrahls die Dicke der Kristallscheiben in Ausbreitungsrichtung des Pumplichtstrahls zunimmt.

Bei der Verwendung zweier entgegengesetzt eingekoppelter Pumplichtstrahlen annähernd gleicher Intensität ist es dementsprechend von Vorteil, die Kristallscheiben derart anzuordnen, dass die Dicke der Kristallscheiben von der Mitte zum Rand hin abnimmt, so dass die Scheibendickenverteilung symmetrisch zur Mitte des Resonators ist. Mit anderen Worten: die beiden äußeren Kristallscheiben sind gleich dick und dünner als die innenliegenden Kristallscheiben.

In einer alternativen Ausgestaltung der Erfindung ist zur Egalisierung der absorbierten Pumpleistung vorgesehen, Kristallscheiben zu verwenden, deren chemische Zusammensetzung, insbesondere deren Dotierung voneinander verschieden ist, wobei bei Verwendung nur eines einzigen Pumplichtstrahls die Dotierung in Ausbreitungsrichtung des Pumplichtstrahls von Kristallscheibe zu Kristallscheibe zunimmt.

Vorzugsweise ist zur Einkopplung des Pumplichtstrahls in den Resonator ein wellenlängenselektiver Resonatorspiegel vorgesehen, der für den Laserstrahl reflektierend und für den Pumplichtstrahl transmittierend ist. Dies ermöglicht eine besonders einfache Einkopplung des Pumplichtsstrahles in den Resonator.

Alternativ hierzu kann zur Einkopplung des Pumplichtstrahls in den Strahlengang des Laserstrahls auch ein Strahlteiler vorgesehen sein.

In einer weiteren bevorzugten Ausgestaltung der Erfindung ist zur Auskopplung des Laserstrahls ein wellenlängenselektiver Resonatorspiegel vorgesehen, der zumindest einen Teil des Laserstrahls transmittiert (auskoppelt) und den Pumplichtstrahl reflektiert. Dadurch wird eine besonders effiziente Ausnutzung der Pumpleistung erzielt.

Vorzugsweise werden in den Resonator wenigstens zwei Pumplichtstrahlen eingekoppelt, die sich im Resonator in einander entgegengesetzte Richtungen ausbreiten. Auf diese Weise ist es möglich, bei kollinearen optischen Achsen die Anzahl der in einem gefalteten Strahlengang hintereinander angeordneten Kristallscheiben zu erhöhen.

Zur weiteren Erläuterung der Erfindung wird auf die Zeichnungen verwiesen. Es zeigen:
- Fig. 1: einen Festkörperlaser nach dem Stand der Technik in einer schematischen Prinzipdarstellung,
- Fig. 2: den ebenfalls aus dem Stand der Technik bekannten prinzipiellen Aufbau eines eine Kristallscheibe enthaltenden Laserelementes in einem Schnitt,
- Fig. 3: einen dem Stand der Technik entsprechenden Festkörperlaser, bei dem zwei Pumplichtstrahlen in den Resonator eingekoppelt werden,
- Fig. 4a,b: erfindungsgemäße Ausführungsformen, bei denen der Pumplichtstrahl im Innern des Resonators auf die Kristallscheiben mit ringförmigen Linsen fokussiert wird,
- Fig. 5: eine alternative Ausführungsform einer zur Fokussierung des Pumplichtstrahls geeigneten Linse,
- Fig. 6: eine alternative Einkopplung des Pumplichtstrahls in den Resonator,
- Fig. 7: eine Ausführungsform mit einem Resonatorspiegel mit gekrümmter Oberfläche,

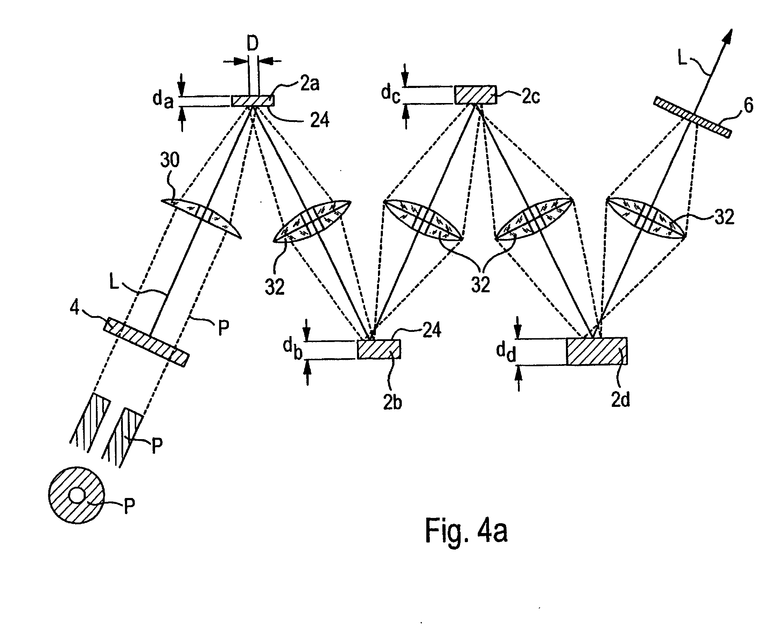

Im erfindungsgemäßen Ausführungsbeispiel gemäß Fig. 4a sind die vorstehend bereits erläuterten unterschiedlichen Ausbreitungsbedingungen für den Pumplichtstrahl P einerseits und für den Laserstrahl L andererseits deutlicher hervorgehoben. In einer ersten resonatorinternen Linse 30 wird der beispielsweise von einem Laserdiodenstack erzeugte Pumplichtstrahl P auf die erste Kristallscheibe 2a derart fokussiert, dass sein Querschnitt an der Flachseite 24 eine Kreisscheibe mit einem Durchmesser D von beispielsweise etwa 5mm bildet. In der auf diese Weise festgelegten Zone wird nun der Laserstrahl L erzeugt. Der auf der Rückseite der Kristallscheibe 2a reflektierte und aus ihr austretende Pumplichtstrahl P hat eine hohe Divergenz und wird durch die Linse 32 auf die optisch nachgeordnete Kristallscheibe 2b fokussiert, so daß auf der Flachseite 24 dieser Kristallscheibe 2b ein Bild der vom Pumplichtstrahl P beleuchteten Fläche der Kristallscheibe 2a erzeugt wird. Der Laserstrahl L hat einen Durchmesser, der in etwa dem Durchmesser der beleuchteten Fläche entspricht und ist in der Figur der Übersichtlichkeit halber nur als mit der optischen Achse beider Strahlen P,L zusammenfallende Linie dargestellt. Die im Ausführungsbeispiel verwendeten Linsen 30,32 sind im Bereich der optischen Achse hohl, d.h. als Ringlinsen ausgebildet, so daß sie keine Abbildung oder Fokussierung des Laserstrahls L bewirken und keine Wirkung auf die den Laserstrahl L beeinflussenden Eigenschaften des Resonators 8 haben.

Der Pumplichtstrahl P hat gemäß dem Ausführungsbeispiel vorzugsweise einen ringförmigen Querschnitt, so dass der gesamte Pumplichtstrahl P von den Linsen 30,32 erfasst und fokussiert wird.

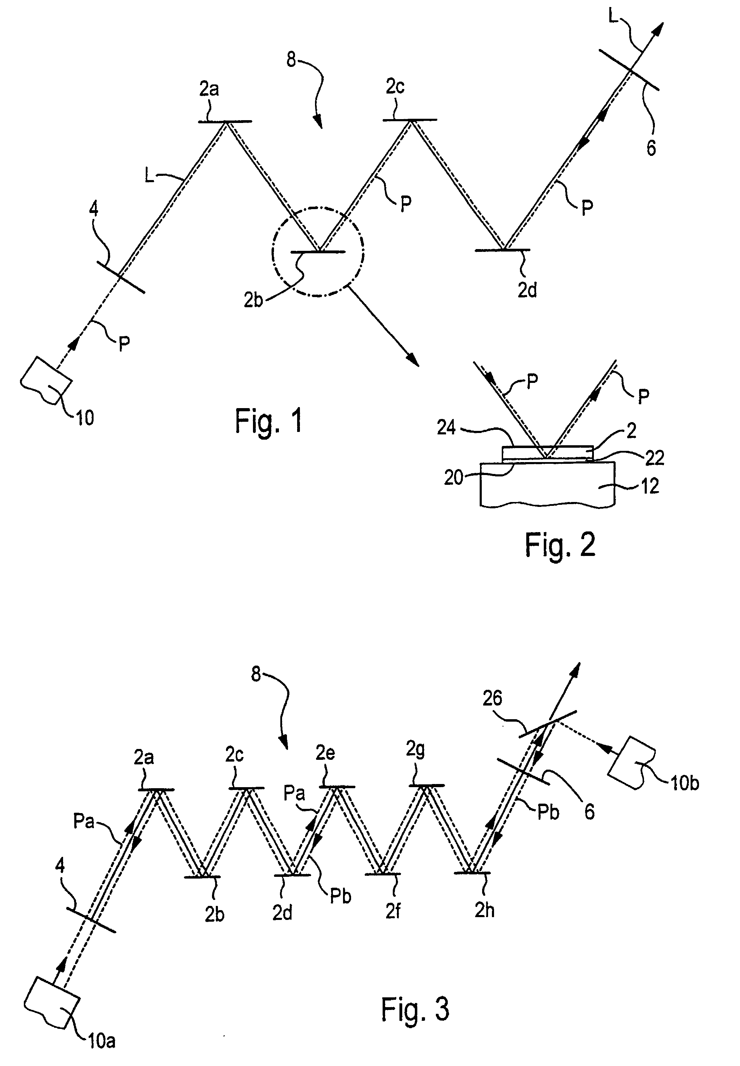

Um sicherzustellen, dass die von jeder Kristallscheibe 2a-d absorbierte Pumpleistung trotz der von Kristallscheibe zu Kristallscheibe abnehmenden Intensität des Pumplichtstrahls gleich groß ist, nimmt die Dicke dₐ-d_{d} der Kristallscheiben 2a-d mit wachsender Anzahl der jeweils vorgeordneten Kristallscheiben zu, d.h. dₐ<d_{b}<d_{c}<d_{d}, wie dies in der Fig. schematisch veranschaulicht ist. Die Variation der Dicke ist an die konkreten Ausbreitungsverhältnisse für den Pumplichtstrahl im Resonator 8 anzupassen. In der Anordnung gemäß Fig. 3 nimmt deshalb die Dicke der Kristallscheibeh jeweils zur Mitte des Resonators hin zu, so daß in dieser Anordnung die mittig angeordneten Kristallscheiben eine größere Dicke als die resonatorendseitig angeordneten Kristallscheiben haben. Alternativ hierzu kann auch die chemische Zusammensetzung, d.h. die Dotierung entsprechend eingestellt werden. In diesem Fall nimmt bei gleicher Dicke der Kristallscheiben die Dotierung - bei Yb:YAG als laseraktives Medium die Dotierung mit Yb - mit wachsender Anzahl der jeweils vorgeordneten Kristallscheiben zu. Alternativ hierzu kann auch sowohl die Dicke als auch die Dotierung geeignet variiert werden, um zu erreichen, dass jede Kristallscheibe annähernd die gleiche Pumpleistung absorbiert.

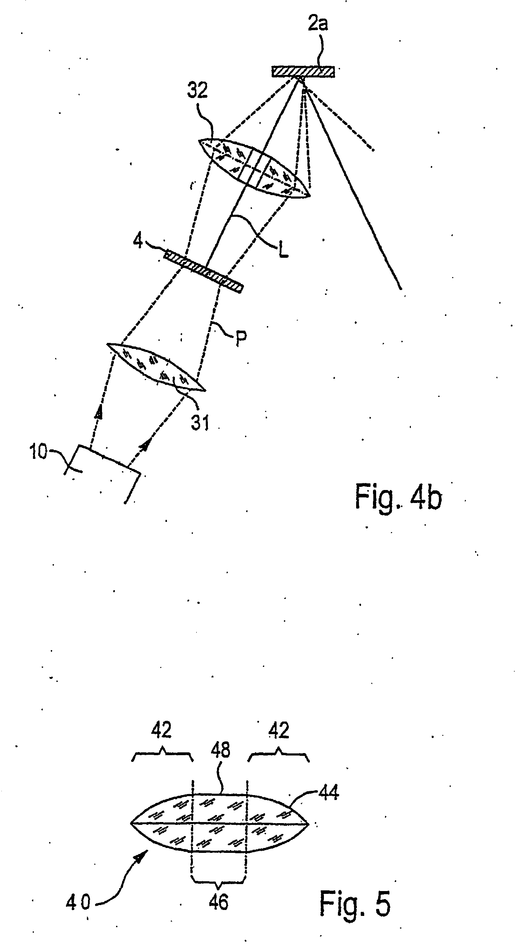

Gemäß Fig. 4b ist anstelle eines resonatorextern, ein paralleles Bündel bildenden Pumplichtstrahles ein von der Pumplichtquelle 10 erzeugter divergenter Pumplichtstrahl P vorgesehen, der über eine resonatorexterne Linse 31 auf den Resonatorspiegel abgebildet wird, so daß er sich ausgehend von diesem resonatorintern in gleicher Weise ausbreitet wie der von den Kristallscheiben 2a (-d) jeweils ausgehende Pumplichtstrahl. Dadurch können die resonatorintern zu seiner Abbildung verwendeten Linsen 32 identisch sein.

Als resonatorinternes Abbildungselement kann anstelle einer Linse mit einer zentralen Öffnung auch gemäß Fig. 5 eine Linse 40 vorgesehen sein, die nur in einem ringförmigen Bereich 42 gekrümmte Oberfläche 44 aufweist, in ihrem zentralen Bereich 46 jedoch mit planen Oberflächen 48 versehen ist.

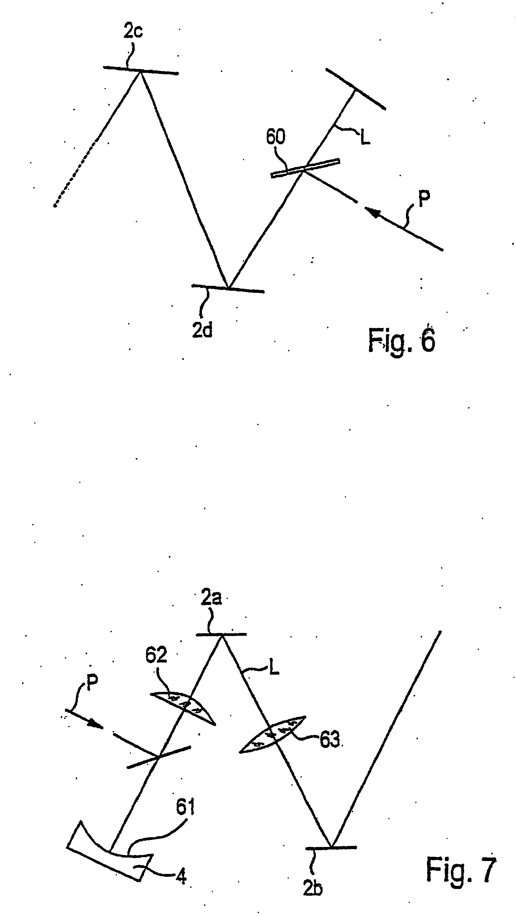

Im Ausführungsbeispiel gemäß Fig. 6 wird der Pumplichtstrahl nicht durch einen der Resonatorspiegel 4,6 sondern quer zum Laserstrahl L mittels eines Strahlteilers 60 eingekoppelt. Eine solche Einkopplung ist insbesondere dann von Vorteil, wenn eine Vielzahl, beispielsweise mehr als 8 Kristallscheiben optisch gekoppelt werden, so dass auch eine beidseitige Einkopplung eines Pumplichtstrahls P nicht mehr zur Anregung der in der Mitte des Resonators 8 angeordneten Kristallscheiben ausreicht. In diesem Falle kann durch einen solchen innerhalb des Resonators 8 angeordneten Strahlteiler 60 an beliebiger Stelle Pumplicht in den Strahlengang des Laserstrahls L eingekoppelt werden.

Eine Einkopplung mit einem Strahlteiler 60 ist im Ausführungsbeispiel gemäß Fig. 7 vorgesehen, bei dem zumindest einer der Resonatorspiegel 4,6 mit einer gekrümmten reflektierenden Oberfläche 61 versehen ist, so daß ein stabiler Resonator entsteht. In diesem Ausführungsbeispiel ist es auch möglich, dass durch die zur Fokussierung des Pumplichtstrahls P verwendeten resonatorinternen Abbildungselemente, im Beispiel Linsen 62,63 die im Unterschied zu der Ausführungsform gemäß Fig. 5 im zentralen Bereich eine gekrümmte Oberfläche aufweisen, auch eine Strahlformung des Laserstrahls L durchgeführt wird. Durch die Verwendung eines entsprechend strahl formenden Resonatorspiegels ergibt sich ein Resonator mit den jeweils gewünschten strahlformenden Eigenschaften.

### Bezugszeichenliste

- 2;2a-2h: Kristallscheibe
- 4,6: Resonatorspiegel
- 8: Resonator
- 10,10a,10b: Pumplichtquelle
- 12: Kühlelement
- 20,24: Flachseite
- 22: Schicht
- 26: Strahlteiler
- 30,31,32: Linse
- 34: Öffnung
- 40: Linse
- 42: ringförmiger Bereich
- 44: Oberfläche (gekrümmt)
- 46: zentraler Bereich
- 48: Oberfläche (plan)
- 60: Strahlteiler
- 61: gekrümmte Oberfläche
- 62,63: Linse

- L: Laserstrahl
- P;Pa,Pb: Pumplichtstrahl

## Patentansprüche

1. Festkörperlaser mit einem aktiven Medium zum Erzeugen eines Laserstrahls (L), das aus einer Mehrzahl von in einem Resonator (8) angeordneten und miteinander optisch gekoppelten und einen gemeinsamen Strahlengang für den Laserstrahl (L) bildenden Kristallscheiben (2;2a-h) besteht, und mit einer Pumplichtquelle (10;10a,10b) zum Erzeugen eines Pumplichtstrahls (P;Pa,Pb), dessen optische Achse die Flachseiten (20,24) mehrerer optisch hintereinander angeordneter Kristallscheiben (2a-2h) schneidet und zur optischen Achse des Laserstrahls (L) kollinear ist, wobei innerhalb des Resonators zumindest ein Abbildungselement zur Fokussierung des aus einer Kristallscheibe (2;2a-h) austretenden Pumplichtstrahls (P;Pa,Pb) auf die optisch nachgeschaltete Kristallscheibe angeordnet ist,
**gekennzeichnet dadurch,**
**dass** als Abbildungselement eine Linse (30;32;40) vorgesehen ist und dass das Abbildungselement innerhalb des Resonators (8) angeordnet ist.

2. Festkörperlaser nach Anspruch 1, bei dem die Linse (30,32) mit einer zentralen Öffnung (34) versehen ist.

3. Festkörperlaser nach Anspruch 1, bei dem die Linse (40) eine Oberfläche (44) aufweist, die nur in einem ringförmigen Randbereich (42) gekrümmt ist.

4. Festkörperlaser nach Anspruch 2 oder 3, bei dem ein Pumplichtstrahl (P) mit ringförmigem Querschnitt in den Resonator (8) eingekoppelt wird.

5. Festkörperlaser nach einem der vorhergehenden Ansprüche, bei dem jeweils einer der Flachseiten (20) der Kristallscheiben (2;2a-h) eine Spiegelfläche (22) zugeordnet ist, die den Pumplichtstrahl (P;Pa,Pb) und den Laserstrahl (L) in die Kristallscheibe (2;2a-2h) zurückreflektiert.

6. Festkörperlaser nach Anspruch 5, bei dem die Kristallscheiben (2;2c-2h) derart angeordnet sind, dass sich für den Laserstrahl (L) ein gefalteter Strahlengang ergibt.

7. Festkörperlaser nach einem der vorhergehenden Ansprüche, bei dem die in Ausbreitungsrichtung des Pumplichtstrahls (P;Pa,Pb) optisch hintereinander angeordneten Kristallscheiben (2;2a-2h) im wesentlichen dieselbe Pumplichtleistung absorbieren.

8. Festkörperlaser nach Anspruch 7, bei dem zur Egalisierung der absorbierten Pumplichtleistung die Dicke (d) der Kristallscheiben (2;2a-2h) voneinander verschieden ist.

9. Festkörperlaser nach Anspruch 7 oder 8, bei dem zur Egalisierung der absorbierten Pumplichtleistung die chemische Zusammensetzung der Kristallscheiben (2;2a-2h) voneinander verschieden ist.

10. Festkörperlaser nach einem der vorhergehenden Ansprüche, bei dem zur Einkopplung des Pumplichtstrahls (P;Pa,Pb) in den Resonator (8) ein wellenlängenselektiver Resonatorspiegel (4,6) vorgesehen ist, der für den Laserstrahl reflektierend und für den Pumplichtstrahl transmittierend ist.

11. Festkörperlaser nach einem der Ansprüche 1 bis 9, bei dem zur Einkopplung des Pumplichtstrahls (P;Pa,Pb) in den Strahlengang des Laserstrahls (L) ein Strahlteiler (60) vorgesehen ist.

12. Festkörperlaser nach Anspruch 10 oder 11, bei dem der zur Auskopplung des Laserstrahls (L) ein wellenlängenselektiver Resonatorspiegel (6) vorgesehen ist, der zumindest einen Teil des Laserstrahls (L) transmittiert und den Pumplichtstrahl (P) reflektiert.

13. Festkörperlaser nach einem der vorhergehenden Ansprüche, bei denen in den Resonator (8) zwei Pumplichtstrahlen (Pa,Pb) eingekoppelt werden, die sich im Resonator (8) in einander entgegengesetzte Richtungen ausbreiten.

## Claims

1. Solid-state laser having an active medium for generating a laser beam (L), which comprises a plurality of crystal wafers (2; 2a-h) which are arranged in a resonator (8) and are optically coupled to one another and form a common beam path for the laser beam (L), and having a pumping light source (10; 10a, 10b) for generating a pumping light beam (P; Pa, Pb) whose optical axis intersects the flat sides (20, 24) of a plurality of crystal wafers (2a-2h) arranged optically one after the other and is collinear with respect to the optical axis of the laser beam (L), wherein at least one imaging element for focusing the pumping light beam (P: Pa, Pb) emerging from a crystal wafer (2; 2a-h) onto the optically downstream crystal wafer is arranged within the resonator, **characterized in that** a lens (30; 32; 40) is provided as the imaging element, and **in that** the imaging element is arranged within the resonator (8).

2. Solid-state laser according to Claim 1, in which the lens (30, 32) is provided with a central opening (34).

3. Solid-state laser according to Claim 1, in which the lens (40) has a surface (44) which is curved only in an annular edge region (42).

4. Solid-state laser according to Claim 2 or 3, in which a pumping light beam (P) with an annular cross section is coupled into the resonator (8).

5. Solid-state laser according to one of the preceding claims, in which a respective one of the flat sides (20) of the crystal wafers (2; 2a-h) is assigned a mirror surface (22) which reflects the pumping light beam (P; Pa, Pb) and the laser beam (L) back into the crystal wafer (2; 2a-h).

6. Solid-state laser according to Claim 5, in which the crystal wafers (2; 2c-h) are arranged in such a way as to produce a folded beam path for the laser beam (L).

7. Solid-state laser according to one of the preceding claims, in which the crystal wafers (2; 2a-2h) which are optically arranged one after the other in the propagation direction of the pumping light beam (P; Pa, Pb) essentially absorb the same pumping light power.

8. Solid-state laser according to Claim 7, in which, in order to equalize the absorbed pumping light power, the thickness (d) of the crystal wafers (2; 2a-2h) is different one from the other.

9. Solid-state laser according to Claim 7 or 8, in which, in order to equalize the absorbed pumping light power, the chemical composition of the crystal wafers (2; 2a-2h) is different one from the other.

10. Solid-state laser according to one of the preceding claims, in which, in order to couple the pumping light beam (P; Pa, Pb) into the resonator (8), a wavelength-selective resonator mirror (4, 6) is provided, which is reflective for the laser beam and transmissive for the pumping light beam.

11. Solid-state laser according to one of Claims 1 to 9, in which a beam splitter (60) is provided for coupling the pumping light beam (P; Pa, Pb) into the beam path of the laser beam (L).

12. Solid-state laser according to Claim 10 or 11, in which, in order to couple out the laser beam (L), a wavelength-selective resonator mirror (6) is provided, which transmits at least part of the laser beam (L) and reflects the pumping light beam (P).

13. Solid-state laser according to one of the preceding claims, in which two pumping light beams (Pa, Pb) are coupled into the resonator (8), and propagate in mutually opposite directions in the resonator (8).

## Revendications

1. Laser solide ayant un milieu actif de production d'un faisceau (L) laser qui est constitué d'une multiplicité de tranches (2 ; 2a-h) cristallines disposées dans un résonateur (8), couplées optiquement entre elles et formant un trajet commun pour le faisceau (L) laser, et d'une source (10 ; 10a, 10b) de lumière de pompage de production d'un faisceau (P ; Pa, Pb) de lumière de pompage dont l'axe optique coupe les faces (20, 24) plates de plusieurs tranches (2a-2h) cristallines disposées du point de vue optique les unes derrière les autres et est colinéaire à l'axe optique du faisceau (L) laser, au moins un élément de reproduction à l'intérieur du résonateur étant placé pour la focalisation du faisceau (P ; Pa, Pb) de lumière de pompage sortant d'une tranche (2 ; 2a-h) cristalline sur la tranche cristalline optiquement en aval, **caractérisé en ce qu'**il est prévu comme élément de reproduction une lentille (30 ; 32 ; 40) et **en ce que** l'élément de reproduction est placé à l'intérieur du résonateur (8).

2. Laser solide suivant la revendication 1, dans lequel la lentille (30, 32) est munie d'une ouverture (34) centrale.

3. Laser solide suivant la revendication, dans lequel la lentille (40) a une surface (44) qui n'est incurvée que dans une partie (42) marginale annulaire.

4. Laser solide suivant la revendication 2 ou 3, dans lequel un faisceau (P) fait de lumière de pompage de section transversale annulaire est injecté dans le résonateur (8).

5. Laser solide suivant l'une des revendications précédentes, dans lequel il est associé à respectivement l'une des faces (20) plates des tranches (2 ; 2a-h) cristallines une surface (22) de miroir qui réfléchit le faisceau (P ; Pa, Pb) de lumière de pompage et le faisceau (L) laser dans la tranche (2 ; 2a-2h) cristalline.

6. Laser solide suivant la revendication 5, dans lequel les tranches (2 ; 2c-2h) cristallines sont disposées de manière à obtenir un trajet de faisceau plié pour le faisceau (L) laser.

7. Laser solide suivant l'une des revendications précédentes, dans lequel les tranches (2 ; 2a-2h) cristallines disposées optiquement les unes derrière les autres dans la direction de propagation du faisceau (P; Pa, Pb) de lumière de pompage absorbent sensiblement la même puissance de lumière de pompage.

8. Laser solide suivant la revendication 7, dans lequel pour égaliser la puissance de lumière de pompage qui est absorbée l'épaisseur (d) des tranches (2 ; 2a-2h) cristallines diffère d'une tranche à l'autre.

9. Laser solide suivant la revendication 7 ou 8, dans lequel, pour égaliser la puissance de lumière de pompage qui est absorbée, la composition chimique des tranches (2 ; 2a-2h) cristallines diffère d'une tranche à l'autre.

10. Laser solide suivant l'une des revendications précédentes dans laquelle, pour injecter le faisceau (P ; Pa, Pb) de lumière de pompage dans le résonateur (8), il est prévu un miroir (4, 6) de résonateur sélectif en longueur d'onde, qui est réfléchissant pour le faisceau laser et qui transmet le faisceau de lumière de pompage.

11. Laser solide suivant l'une des revendications 1 à 9, dans lequel, pour injecter le faisceau (P ; Pa, Pb) de lumière de pompage dans le trajet du faisceau (L) laser, il est prévu un diviseur (60) de faisceau.

12. Laser solide suivant la revendication 10 ou 11, dans lequel, pour faire sortir le faisceau (L) laser, il est prévu un miroir (6) de résonateur sélectif en longueur d'onde, qui transmet au moins une partie du faisceau (L) laser et qui réfléchit le faisceau (P) de lumière de pompage.

13. Laser solide suivant l'une des revendications précédentes, dans lequel il est injecté dans le résonateur (8) deux faisceaux (Pa, Pb) de lumière de pompage, qui se propagent dans le résonateur (8) dans des sens opposés.
